(19) Europäisches Patentamt

European Patent Office

Office européen des brevets

(11) EP 0 781 993 B1

(12) EUROPÄISCHE PATENTSCHRIFT

(45) Veröffentlichungstag und Bekanntmachung des Hinweises auf die Patenterteilung:
**15.03.2000 Patentblatt 2000/11**

(51) Int Cl.⁷: $G01N\ 27/12$

(21) Anmeldenummer: **96120427.8**

(22) Anmeldetag: **18.12.1996**

(54) **Gassensor**

Gas sensor

Capteur de gaz

(84) Benannte Vertragsstaaten:
**CH DE ES FR GB IT LI NL**

(30) Priorität: **29.12.1995 DE 19549146**

(43) Veröffentlichungstag der Anmeldung:
**02.07.1997 Patentblatt 1997/27**

(73) Patentinhaber: **SIEMENS AKTIENGESELLSCHAFT**
**80333 München (DE)**

(72) Erfinder:
• **Kappel, Andreas, Dr.**
**81369 München (DE)**
• **Mock, Randolf, Dr.**
**81739 München (DE)**
• **Meixner, Hans, Prof.-Dr.**
**85540 Haar (DE)**

(56) Entgegenhaltungen:
**EP-A- 0 141 089**     **EP-A- 0 311 439**
**GB-A- 2 029 583**     **GB-A- 2 142 147**
**US-A- 4 387 165**     **US-A- 5 372 785**

EP 0 781 993 B1

**Beschreibung**

Resistive Gassensoren basieren auf der Eigenschaft spezieller gassensitiver Materialien. Deren elektrische Eigenschaft ändert sich bei Anwesenheit bestimmter Gase in Abhängigkeit von deren Konzentration in charakteristischer und reproduzierbarer Weise. Die Detektion der Leitfähigkeitsänderung des gas-sensitiven Materials erfolgt meistens auf elektrischem Wege. Dazu wird das gasensitive Material mittels Meßelektroden, z.B. mit einer elektrischen Spannungsquelle derart verbunden, daß sich ein elektrischer Stromkreis ergibt.

Werden resistive Gassensoren im Abgastrakt einer Brennkraftmaschine eingesetzt, um dort die Anwesenheit bestimmter Gase zu detektieren, ist der resistive Gassensor vor mechanischen und chemischen Einflüssen zu schützen. Dies kann durch eine zumindest partiell gasdurchlässige Schutzschicht (Opferschicht), die auf dem gassensitiven Element aufgebracht ist, erreicht werden, vergleiche hierzu DE 43 39 737 C1. Da die Schutzschicht wiederum eine elektrische leitfähigkeit aufweisen und darüber hinaus selbst gassensitiv sein kann, ergibt sich hieraus ein unerwünschter und schlecht zu kontrollierender elektrischer Parallelwiderstand zum eigentlichen Sensorwiderstand. Außerdem kann die Schutzschicht unter dem Einfluß der angreifenden Medien sowohl ihre chemische Zusammensetzung als auch ihre elektrische Leitfähigkeit ändern, was sich zusätzlich in einer driftartigen Veränderung der Sensorkennlinie bemerkbar machen kann. Weiterhin ist der Widerstand der Schutzschicht stark temperaturabhängig. Somit ist der Einfluß der Schutzschicht auf die Meßgenauigkeit auch stark temperaturabhängig.

In GB-A-2142147 ist ein Gassensor beschrieben, der eine planare Struktur der Meßelektroden aufweist, die teilweise von einer gassensitiven Schicht bedeckt sind, welche wiederum teilweise von einer sehr dünnen Metallschicht bedeckt ist. Die Metallschicht ist elektrisch nicht kontaktiert und überdeckt die Elektroden nur unvolkommen. Die Dicke der Metallschicht beträgt typischerweise 20 Å und dient dazu, die elektrischen Eigenschaften der gassensitiven Schicht zu modifizieren und/oder die Reaktion von Gasen mit der halbleitenden Oberfläche zu katalysieren.

In GB-A-2029583 wird ein resistiver Gassensor beschrieben, bei dem mehrere Elektroden auf einer Seite einer gassensitiven Widerstandsschicht aufgebracht sind, und ein Palladiumfilm auf der anderen Seite der Widerstandsschicht. Der sehr feinkörnige Palladiumfilm dient der Katalyse.

Zur Erzielung eines stabilen, das heißt driftfreien, Sensorsignals muß die Sensortemperatur deshalb exakt konstant gehalten werden, was unter den typischen Umgebungsbedingungen, beispielsweise bei schnellen Gasströmungen im Abgastrakt, außerordentlich schwierig ist und in jedem Fall eine schnelle und präzise Temperaturregelung erforderlich macht.

Die Aufgabe der Erfindung ist es, einen Gassensor anzugeben, bei dem die Sensordrift minimiert ist.

Die Aufgabe wird durch einen Gassensor gemaß Patentanspruch 1 gelöst.

Effekte, wie beispielsweise eine Änderung des äußeren elektrischen Feldes, haben keinen Einfluß mehr auf die Meßgenauigkeit.

Der Einfluß der Schutzschicht auf die Meßgenauigkeit wird ebenfalls minimiert.

Vorteilhafte Weiterbildungen ergeben sich aus den abängigen Ansprüchen.

Der Gassensor gemäß Anspruch 2 hat den Vorteil einer erhöhten mechanischen Stabilität.

Um den Einfluß des Substrats auf die Meßgenauigkeit zu reduzieren, kann gemäß Anspruch 3 eine Isolationsschicht zwischen der Meßelektrodenstruktur und dem Substrat vorgesehen sein.

Um die gassensitive Schicht vor chemischen Einflüssen zu schützen, kann gemäß Anspruch 4 eine Schutzschicht vorgesehen sein.

Der Gassensor gemäß Anspruch 6 hat den Vorteil, daß die Charakteristik des Gassensors, das heißt die Sensitivität und die Querempfindlichkeit auf bestimmte Gasarten, durch eine entsprechende Wahl des Katalysators gezielt verändert und eingestellt werden kann. Außerdem kann durch den Katalysator die Steilheit der Sensorkennlinie beeinflußt werden.

Der Gassensor gemäß Anspruch 7 hat den Vorteil einer großen Universalität, da anstelle einer üblicherweise rein metallischen elektrisch leitenden Schicht zum Beispiel auch Metalloxide und Keramiken oder sogar organische Stoffe, wie Phtalocyanin verwendet werden können. Metalloxide und Keramiken beispielsweise zeichnen sich durch eine sehr hohe Temperaturbeständigkeit aus. Durch die Verwendung organischer Materialien können andererseits gezielt chemische Reaktionen katalysiert werden, deren Reaktionsprodukte wiederum durch die gassensitive Schicht nachgewiesen werden können. Die Deckelektrode kann andererseits auch eine Filterwirkung haben, so daß nur bestimmte Gasarten die Deckelektrode durchdringen und von der gassensitiven Schicht detektiert werden können. Hierdurch kann beispielsweise die Selektivität des Sensors verbessert werden.

Zur Erhöhung der Meßgeschwindigkeit kann der Gassensor gemäß Anspruch 8 gebildet sein. Der Gaszutritt zur gassensitiven Schicht wird erhöht.

Zur Erhöhung der Meßgenauigkeit und zur Vergrößerung der Empfindlichkeit kann der Gassensor gemäß Anspruch 11 ausgebildet sein.

Bei dem Gassensor gemäß den Ansprüchen 12, 13, 14 und 15 können die Vorteile eines langen Strompfads mit den Möglichkeiten verschiedener Materialien für die einzelnen horizontalen Lagen der Abschirmelektroden, der Grundelektrode sowie für die einzelnen gassensitiven Schichten kombiniert werden.

Die Erfindung wird im weiteren anhand von 11 Figuren weiter erläutert.

Es zeigt

Figur 1     den prinzipiellen Aufbau des erfindungsgemäßen Sensors,

Figur 2     eine perspektivische Ansicht der Elektroden des erfindungsgemäßen Sensors,

Figur 3     eine Draufsicht des erfindungsgemäßen Sensors,

Figur 4     eine erste mögliche Ausgestaltungsform der Abschirmschicht,

Figur 5     eine zweite mögliche Ausgestaltungsform der Abschirmschicht,

Figur 6     eine dritte Ausgestaltungsform der Abschirmschicht,

Figur 7     eine Draufsicht, wobei die Deckelektrode streifenförmig ausgebildet ist,

Figur 8     eine weitere Ausführungsform des Gassensors im Querschnitt, bei dem sowohl die Grundelektrode als auch die Deckelektrode mehrere Leiterbahnen aufweisen,

Figur 9     eine Draufsicht der in Figur 8 gezeigten Ausführungsform des Gassensors,

Figur 10     eine weitere Ausführungsform des Gassensors im Querschnitt, bei dem die gassensitive Schicht zweilagig aufgebracht ist und zwischen den beiden Lagen eine zweite Abschirmelektrode eingebracht ist, und

Figur 11     eine weitere Ausführungsform des Gassensors im Querschnitt, bei dem die gassensitive dreilagige Schicht treppenförmig angeordnet ist und zwischen den Lagen jeweils Abschirmelektroden eingebracht sind.

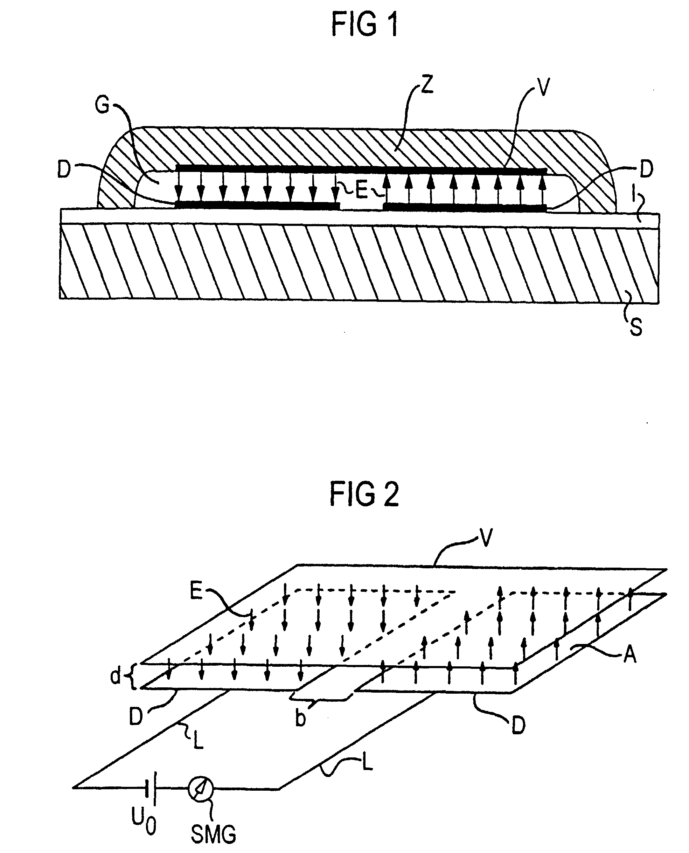

Der in Figur 1 im Querschnitt gezeigte erfindungsgemäße Sensor weist ein Substrat S auf, über welchem eine elektrische Isolationsschicht I vorgesehen ist. Das Vorhandensein der elektrischen Isolationsschicht I ist optional und nur bei einem Substrat S mit störender Eigenleitfähigkeit notwendig. Wie aus Figur 1 weiterhin zu erkennen ist, sind auf der Isolationsschicht I Meßelektroden D und eine gassensitive Schicht G angeordnet. Die gassensitive Schicht G ist teilweise (vergleiche Figur 1) oder ganz mit einer Abschirmelektrode V, im folgenden auch als elektrisch leitende Schicht bezeichnet, versehen. Wiederum darüber ist eine Schutzschicht Z aufgebracht.

Das Vorhandensein der Schutzschicht Z ist nicht zwingend notwendig. Ob die Schutzschicht Z vorhanden sein muß und in welcher Dicke sie auszuführen ist, hängt vom jeweiligen Anwendungszweck des Sensors ab.

Je nach Anwendungsfall ist der Sensor mit einer Heizanordnung zu versehen. Diese ist in Figur 1 nicht dargestellt.

Die Abschirmelektrode V (im folgenden auch als Abschirmschicht bezeichnet) dient als Äquipotentialfläche für das elektrische Feld E über den Meßelektroden D, die hier auch als Grundelektroden bezeichnet werden. Die Abschirmelektrode V schirmt das elektrische Feld E gegenüber dem Außenraum, insbesondere gegenüber dem Bereich der Schutzschicht Z, sofern diese vorhanden ist, elektrisch vollständig ab (= Faraday'sche Abschirmung). Die Abschirmelektrode V weist keine elektrischen Anschlüsse auf.

Zur Verdeutlichung der Wirkungsweise des erfindungsgemäßen Gassensors zeigt Figur 2 in einer perspektivischen Ansicht die Meßelektroden D und die Abschirmelektrode V des Sensors, wobei mit L die Zuleitungen der Meßelektroden D bezeichnet sind. Diese sind mit einer Versorgungsspannungsquelle, die eine Spannung $U_0$ erzeugt und einem Strommeßgerät SMG verbunden. Zwischen den Meßelektroden D und der Abschirmelektrode V bildet sich nach Anlegen der Spannung $U_0$ ein elektrisches Feld E aus.

Die Anordnung der Grundelektroden D und der Abschirmelektrode V entspricht im wesentlichen derjenigen zweier seriell geschalteter Plattenkondensatoren mit einem Plattenabstand d und einem gassensitiven, elektrisch leitfähigen Dielektrikum, welches in diesem Fall die gassensitive Schicht G darstellt. Das elektrische Feld E ist deshalb auf dem Bereich zwischen den Meßelektroden D und der Abschirmelektrode V beschränkt, wodurch der Vektor der elektrischen Feldstärke E (mit Ausnahme der zu vernachlässigenden Randbereiche) orthogonal auf den Elektrodenoberflächen steht. Der durch die Spannungsquelle in dem elektrischen Kreis hervorgerufene Strom, der ein Maß für die Gaskonzentration ist, sowie dessen Änderungen, werden durch das Strommeßgerät SMG zur Anzeige gebracht.

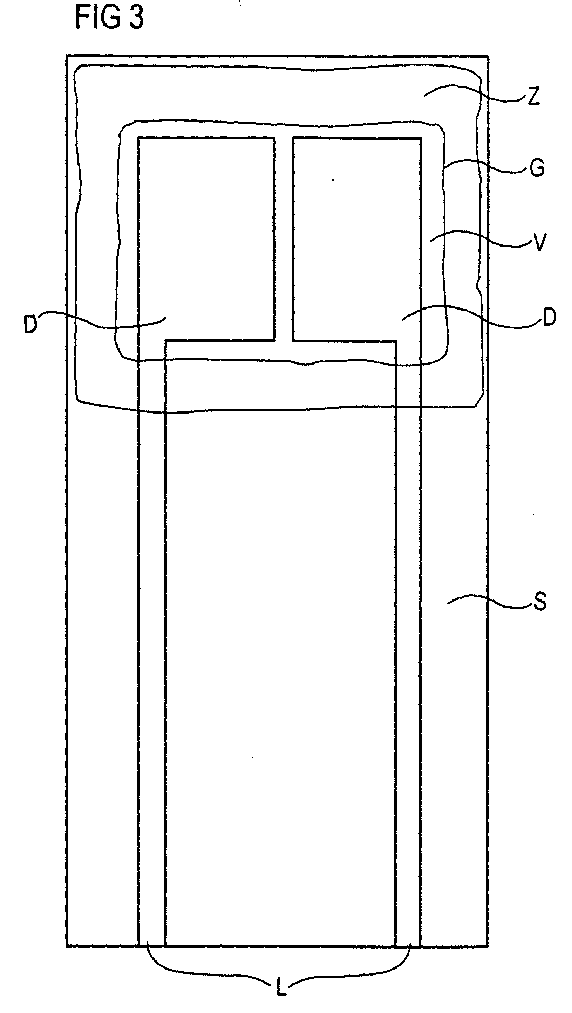

In Figur 3 ist die Draufsicht des Sensors dargestellt. Die flächenhaften Grundelektroden D befinden sich auf der Oberfläche des Substrats S, welches unter Umständen mit einer Isolationsschicht I (in Figur 3 nicht dargestellt) versehen ist. Zur Stromzuführung dienen die Leiterbahnen L, mit denen die Meßelektroden D verbunden sind. Zwischen den Meßelektroden D und der gasdurchlässigen Abschirmelektrode V, die über den Meßelektroden D angeordnet ist, befindet sich die gassensitive Schicht G.

Zum Schutz des Sensors ist der aktive Sensorbereich mit einer gasdurchlässigen Schutzschicht Z abgedeckt.

Die Sensorheizung ist zweckmäßigerweise auf der Rückseite des Substrats S im Bereich des aktiven Sensormaterials G angeordnet und so dimensioniert, daß in diesem Bereich eine möglichst homogene Temperaturverteilung erreicht wird.

Zum Schutz der Zuleitungen L, z.B. vor Oxidation, chemischen und mechanischem Angriff, können die Leiterbahnen L mit einer zusätzlichen Abdeckschicht versehen sein (in den Figuren nicht gezeigt).

Durch die Anbringung der Abschirmelektrode V oberhalb der Meßelektroden D ergeben sich folgende Vorteile:

1. Der Sensor kann sehr niederohmig ausgelegt werden, womit Probleme, die sonst durch elektrische Einstreuungen und durch elektrische Parallelwiderstände hervorgerufen werden würden, stark verringert werden.

Unter der Bedingung, daß der laterale Abstand b der Meßelektroden D (vergleiche Figur 2) untereinander wesentlich größer als der Abstand d ist, d. h. b » d, gilt für den Sensorwiderstand

$$R_s = \rho \cdot \frac{d}{A} \qquad [\Omega]$$

wobei

$\rho$ = spezifischer elektrischer Widerstand des gassensitiven Materials G $[\Omega m]$, und
A = Fläche der Oberseite einer Meßelektrode D $[m^2]$

2. Die Sensorfläche kann erheblich verkleinert werden, was eine Verringerung der Heizleistung ermöglicht und zusätzlich eine homogene Temperaturverteilung im Bereich des gassensitiven Materials G sehr erleichtert.

3. Die herstellungstechnischen Anforderungen sind aufgrund der jetzt möglichen groben Elektrodenstrukturen deutlich geringer. Dies erlaubt beispielsweise eine niedrigere Reinraumklasse und eine einfache Strukturierungstechnik, z.B. Abhebetechnik.

4. Veränderungen der elektrischen Leitfähigkeit der Schutzschicht Z, welche z.B. durch eine allmähliche chemische Umsetzung der Schutzschicht (Oxidation, Nitrierung etc.) im Dauerbetrieb, durch mechanischen Abrieb oder durch eine Verschmutzung der Oberfläche z.B. Abriebpartikel, Kondenswasser) hervorgerufen werden, haben keine Auswirkungen auf das elektrische Sensorsignal.

5. Durch katalytisch aktive Materialien für die Abschirmelektrode V können die gassensitiven Eigenschaften des Sensors gezielt beeinflußt werden.

6. Für die Abschirmelektrode V können nicht nur Metalle und Metallverbindungen, sondern allgemein solche Materialien verwendet werden, deren elektrische Leitfähigkeit in Relation zu derjenigen der Schutzschicht Z so groß ist, daß eine ausreichende elektrische Faraday'sche Abschirmung erzielt werden kann. Dazu zählen alle hinreichend elektrisch leitfähigen anorganischen (zum Beispiel Metalloxide, Keramiken, Halbleiter) und organische Elemente und Verbindungen (zum Beispiel Phtalocyanin).

7. Die Abschirmelektrode V kann ihrerseits aus einem Mehrlagensystem bestehen, zum Beispiel einer elektrisch leitfähigen Lage, die der Faraday'schen Abschirmung dient und einer katalytisch aktiven Lage.

Eine ausreichende Gasdurchlässigkeit der Abschirmelektrode V kann auf verschiedene Arten erreicht werden:

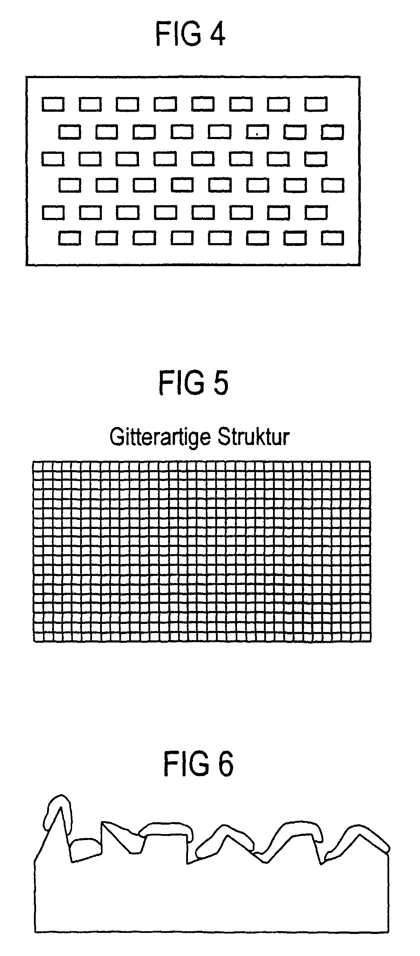

I. Strukturierung (Photo- und Ätztechnik) einer ganzflächig abgeschiedenen Abschirmschicht V, so daß freie Bereiche (löchrige, gitterartige oder streifenartige Strukturen) entstehen, durch die hindurch der Gasdurchtritt/Gasdiffusion erfolgen kann, vergleiche Figur 4 und 5.

II. Strukturierte Aufbringung der Abschirmelektode V, z.B. mittels Siebdrucktechniken, in Form von löchrigen, gitterartigen oder streifenartigen Strukturen, vergleiche Figuren 4 und 5.

III. Ganzflächige Aufbringung einer so dünnen Schicht für die Abschirmelektrode V, z.B. durch Sputtern oder Aufdampfen, daß eine ausreichende Diffusion von Gasmolekülen durch die Abschirmelektrode V hindurch möglich ist.

IV. Ganzflächige Aufbringung einer in Relation zur Oberflächentopografie der gassensitiven Schicht G, die z.B. durch Siebdrucken erzeugt wurde, derart dünnen Schicht für die Abschirmelektrode V, die z.B. durch Sputtern oder Aufdampfen erzeugt wurde, daß sich eine zwar zusammenhängende, aber aufgrund der schlechten Kantenbedeckung, sehr gasdurchlässige Struktur ergibt. Siehe hierzu Figur 6.

Ein besonders niederohmiger Sensorwiderstand kann auch hier durch sogenannte Interdigitalstrukturen, das heißt kammartige ineinander geschachtelte Strukturen, für die Meßelektroden D erreicht werden. Die Interdigitalelektroden können dabei sowohl zur Stromzuführung als auch zum Potentialabgriff dienen. Typischerweise betragen die Fingerabstände der Elektroden 1 µm bis 100 µm.

Für die Meßelektroden D werden niederohmige, metallische Elemente oder metallische Verbindungen eingesetzt.

Die Abschirmschicht V kann auch geschlossen sein, was in den Figuren nicht dargestellt ist. Eine Diffusion durch die Abschirmschicht V ist auch in diesem Fall ein Gaszutritt zur gassensitiven Schicht G möglich.

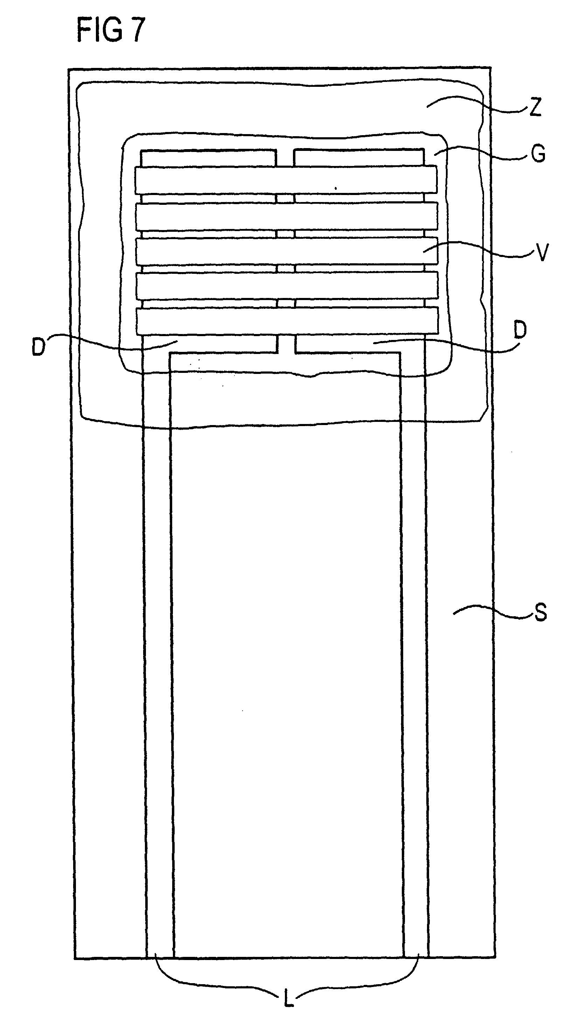

Bei dem in Figur 7 gezeigten Ausführungsbeispiel weist die elektrisch leitfähige Abschirmelektrode V streifenförmige Leiterbahnen auf. Diese sind über den Grundelektroden D so angeordnet, daß von jeder einzelnen Leiterbahn der Abschirmelektrode V große Bereiche der Grundelektroden D überdeckt werden und ein Stromfluß von einer der Grundelektroden D durch das gassensitive Material G in die streifenförmigen Leiter der Abschirmelektrode V und von dort wiederum durch die gassensitive Schicht G in den anderen Teil der Grundelektrode D möglich ist. Außerdem sind die einzelnen streifenförmigen Leiterbahnen der Abschirmschicht V mit einem gewissen Abstand zueinander angeordnet, so daß durch die Zwischenräume zwischen den einzelnen Leiterbahnen der Abschirmelektrode ein guter Gasdurchtritt zu der darunterliegenden gassensitiven Schicht G möglich ist. Neben der einfachen Struktur zeichnet sich der in Figur 7 gezeigte Aufbau zusätzlich durch ein gutes Ansprechverhalten aus.

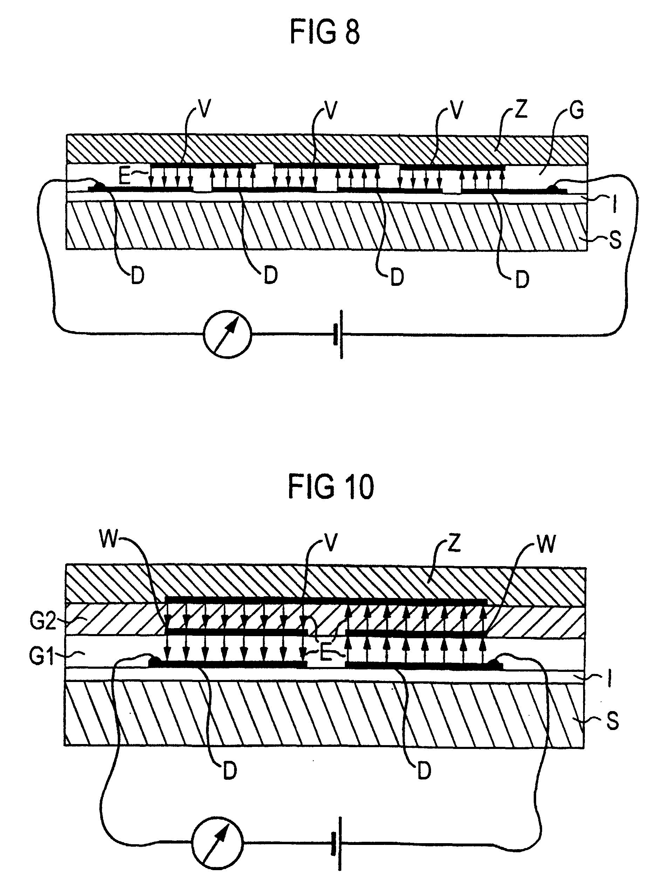

Wie Figur 8 zeigt, ist es durch eine sequentielle Anordnung der Leiterbahnen der Grundelektrode D und der Leiterbahnen der Abschirmelektrode V in überlappender Form möglich, den Strompfad in dem gassensitiven Material G gegenüber den in den Figuren 1 bis 3 gezeigten Ausführungsbeispielen wesentlich zu verlängern. Hierdurch kann auf einfache Weise ein höherer Sensorwiderstand realisiert werden, was bei sehr niederohmigen gassensitiven Materialien für die gassensitive Schicht G von Vorteil sein kann. Gleichzeitig ist durch die streifenförmige und unterbrochene Anordnung der Abschirmelektrode V ein guter Gaszutritt zu der gassensitiven Schicht gewährleistet.

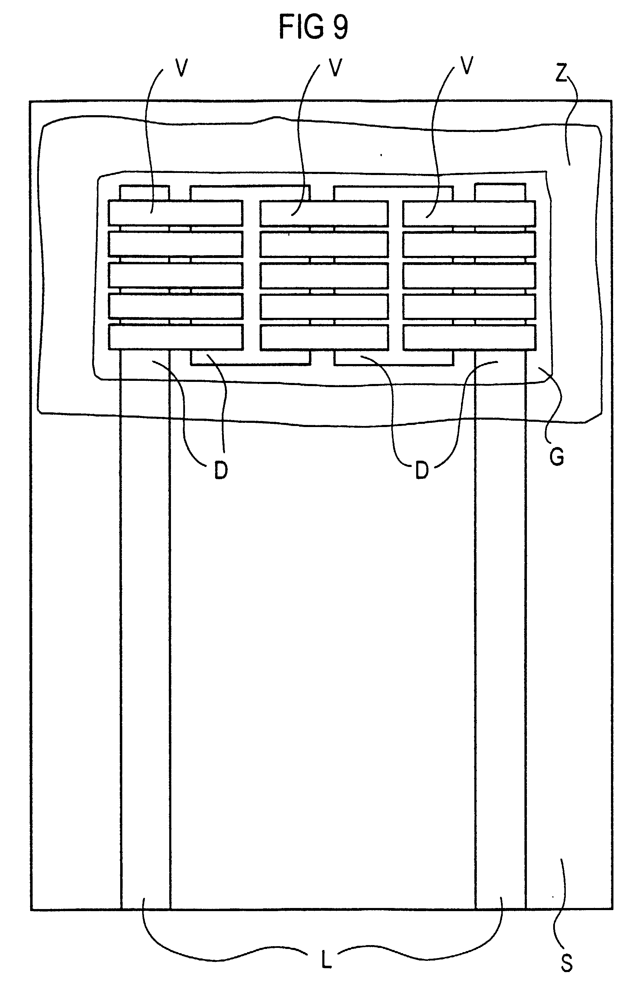

Figur 9 zeigt eine Draufsicht eines nach dem in Figur 8 beschriebenen Prinzip aufgebauten Gassensors mit einer Grundelektrode D, die vier Leiterbahnen aufweist. Die Abschirmelektrode V ist in drei Bereiche unterteilt, die ihrerseits aus streifenförmigen Leiterbahnen (= Leitern) bestehen. Die Funktionsweise entspricht der in Figur 3 beschriebenen Anordnung.

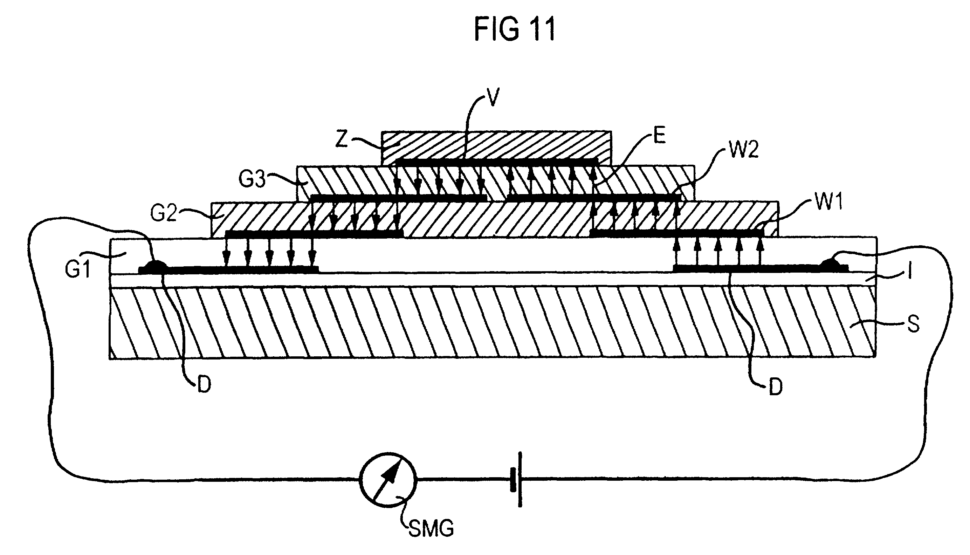

Neben den verschiedenen Möglichkeiten der horizontalen Anordnung der Grundelektrode D und einzelner Bereiche der Abschirmelektrode V, wie sie in den bisherigen Ausführungsbeispielen besprochen wurden, kann die Abschirmelektrode V auch auf verschiedene Arten vertikal geschichtet werden. Ein Ausführungsbeispiel hierfür ist in Figur 10 gezeigt. Durch die Verwendung verschiedener Materialien für die Elektroden D, W, und V und insbesondere durch die Verwendung unterschiedlicher gassensitiver Materialien für die Schichten G1 und G2 und durch unterschiedliche Schichtdicken für diese Schichten G1 und G2 können die Sensoreigenschaften in weiten Bereichen verändert oder gezielt an die Erfordernisse angepaßt werden.

Durch eine Kombination verschiedener gassensitiver Schichten in einem einzigen Sensor können Gassensoren mit völlig neuartigen Sensorcharakteristiken hergestellt werden.

Durch eine zusätzliche streifenförmige Gestaltung der einzelnen Leiterbahnen der Abschirmelektrode V auf die schon dargestellte Art, vergleiche Figur 7 und Figur 9, kann auch hierbei der Gaszutritt verbessert und damit die Ansprechgeschwindigkeit erhöht werden.

Durch eine vertikale Staffelung überlappender Leiterbahnen der Grundelektrode D und verschiedene Abschirmelektrodenstrukturen V, W1, W2, können letztlich Anordnungen verwirklicht werden, wie sie in Figur 11 gezeigt sind. Dadurch können die Vorteile eines langen Strompfads mit einer guten Gaszutritt und den Möglichkeiten verschiedener Materialien für die einzelnen horizontalen Lagen der Abschirmelektroden W1, W2 der Grundelektrode D und der Topelektrode V sowie für die einzelnen gassensitiven Schichten G1, G2 und G3 kombiniert werden.

Gegenüber dem in Figur 10 gezeigten Ausführungsbeispiel wird durch die treppenförmige Geometrie der Gaszutritt insbesondere zu den unteren gassensitiven Schichten G1 und G2 wesentlich verbessert.

Die Überlappung der einzelnen gassensitiven Schichten G1, G2 und G3 ist außerdem so gewählt, daß die jeweils obere Schicht als Schutzschicht für die darunter befindliche gassensitive Schicht dient. Das heißt, die Schicht Z dient zum Schutz des aktiven Bereichs der gassensitiven Schicht G3. Die gassensitive Schicht G3 dient zum Schutz des aktiven Bereichs der gassensitiven Schicht G2 und die gassensitive Schicht G2 dient zum Schutz des aktiven Bereichs der gassensitiven Schicht G1.

Zur weiteren Steigerung der Ansprechgeschwindigkeit können auch hier die einzelnen Abschirmelektroden V, W2 und W1 zusätzlich auf die schon dargestellte Art streifenförmig ausgeführt werden.

Die Anzahl der einzelnen gassensitiven Schichten der in den Figuren 10 und 11 gezeigten Ausführungsbeispielen ist prinzipiell nicht begrenzt.

Ebenso ist bei allen vorgestellten Ausführungsbeispielen eine Faraday'sche Abschirmung der aktiven Bereiche des gassensitiven Materials gegenüber äußeren elektrischen Feldern gewährleistet. Durch die Kombination verschiedener gassensitiver Schichten in einem einzigen Sensor können Gassensoren mit völlig neuartigen Sensorcharakteristiken hergestellt werden. Beispielsweise kann durch einen Betrieb des Gassensors bei verschiedenen Temperaturen, die unterschiedliche Temperaturabhängigkeiten der Meßempfindlichkeit und der Meßcharakteristik der verschiedenen gassensitiven Schichten benutzt werden, um selektiv verschiedene Gaskomponenten in einem Gasgemisch zu bestimmen in diesem Fall die gassensitive Schicht G darstellt. Das elektrische Feld E ist deshalb auf den Bereich zwischen den Meßelektroden D und der Abschirmelektrode V beschränkt, wodurch der Vektor der elektrischen Feldstärke E (mit Ausnahme der zu vernachlässigenden Randbereiche) orthogonal auf den Elektrodenoberflächen steht. Der durch die Spannungsquelle $U_0$ in dem elektrischen Kreis hervorgerufene Strom, der ein Maß für die Gaskonzentration ist sowie dessen Änderungen, werden durch das Strommeßgerät SMG zur Anzeige gebracht.

**Patentansprüche**

1.  Gassensor bestehend aus:

    -   einer gassensitiven Schicht (G),
    -   einer Meßelektrodenstruktur (D) auf einer Sei der gassensitiven Schicht (G),
    -   einer der Meßelektrodenstruktur (D) auf der anderen Seit der gassensitiven Schicht (G) gegenüberliegende Schicht (V), die elektrisch nicht kontaktiert ist,

    dadurch gekennzeichnet, daß
    die gegenüberliegende Schicht (V)

    -   elektrisch leitend ist und ihre laterale Ausdehnung ungefähr der Meßelektrodenstruktur (G) entspricht,
    -   elektrisch abschirmend wirkt und einen Stromfluß durch die gassensitive Schicht (G) leitet.

2.  Gassensor nach Anspruch 1,
    bei dem ein Substrat (S) vorgesehen ist, das die Meßelektrodenstruktur (D), die gassensitive Schicht (G) und die elektrisch leitende Schicht (V) trägt.

3.  Gassensor nach Anspruch 1 oder 2,
    bei dem zwischen der Meßelektrodenstruktur (D) und dem Substrat (S) eine Isolationsschicht (I) vorgesehen ist.

4.  Gassensor nach einem der Ansprüche 1 - 3,
    bei dem die gassensitive Schicht (G) und die elektrisch leitende Schicht (V) mit einer Schutzschicht (Z) überzogen sind.

5.  Gassensor nach einem der Ansprüche 1 - 4,
    bei dem die gassensitive Schicht (G) Strontiumtitanat Bariumtitanat, Vanadiumoxid, Galliumoxid, Ceroxid, Bariumstanat oder Zinkoxid aufweist.

6.  Gassensor nach einem der Ansprüche 1 - 5,
    bei dem die elektrisch leitende Schicht (V) ein katalytisch aktives Material aufweist.

7.  Gassensor nach einem der Ansprüche 1 - 5,
    bei dem die elektrisch leitende Schicht (V) ein Metalloxid, eine Keramik oder ein organisches Material aufweist.

8.  Gassensor nach einem der Ansprüche 1 - 7,
    bei dem die elektrisch leitende Schicht (V) eine poröse oder löchrige Struktur aufweist.

9.  Gassensor nach einem der Ansprüche 4 - 8,
    bei dem die Schutzschicht (Z) Strontiumtitanat, Bariumtitanat, Vanadiumoxid, Galliumoxid, Ceroxid, Bariumstanat oder Zinkoxid aufweist.

10. Gassensor nach einem der Ansprüche 4 - 9,
    bei dem die Schutzschicht (Z) und die gassensitive Schicht (G) das gleiche Material aufweisen.

11. Gassensor nach einem der Ansprüche 1 - 10,
    bei dem ein Mittel zum Heizen vorgesehen ist.

12. Gassensor nach einem der Ansprüche 1 - 3, 5 - 8, 10 oder 11,

    -   bei dem wenigstens eine weitere gassensitive Schicht (G2, G3) vorgesehen ist, die über der elektrisch leitenden Schicht (V) angeordnet ist,
    -   bei dem wenigstens eine weitere elektrisch leitende Schicht (W1, W2) vorgesehen ist, die über der weiteren gassensitiven Schicht ((G2, G3) angeordnet ist.

13. Gassensor nach Anspruch 4 oder 9,
    bei dem zwischen der elektrisch leitenden Schicht (V) und der Schutzschicht (Z) wenigstens eine weitere gassensitive Schicht (G2, G3) und wenigstens eine weitere elektrisch leitende Schicht (W1, W2) vorgesehen sind.

14. Gassensor nach Anspruch 12 oder 13,
    bei dem die weitere gassensitive Schicht (G2, G3) Strontiumtitanat Bariumtitanat, Vanadiumoxid, Galliumoxid, Ceroxid, Bariumstanat oder Zinkoxid aufweist.

15. Gassensor nach einem der Ansprüche 12 - 14,
    bei dem die weitere elektrisch leitende Schicht (W1, W2) ein Metalloxid, eine Keramik oder ein organisches Material aufweist.

16. Gassensor nach einem der Ansprüche 12 - 15,
    bei dem die weitere elektrisch leitende Schicht (W1, W2) eine poröse oder löchrige Struktur aufweist.

**Claims**

1.  Gas sensor consisting of:

- a gas-sensitive layer (G),
- a measuring electrode structure (D) on one side of the gas-sensitive layer (G),
- a layer (V), with which electrical contact is not made, opposite the measuring electrode structure (D) on the other side of the gas-sensitive layer (G),

  characterized in that
  the opposite layer (V)

- is electrically conducting and, in terms of its lateral extent, corresponds approximately to the measuring electrode structure (G),
- has an electrical screening effect and directs a current through the gas-sensitive layer (G).

2. Gas sensor according to Claim 1, in which a substrate (S) is provided which carries the measuring electrode structure (D), the gas-sensitive layer (G) and the electrically conducting layer (V).

3. Gas sensor according to Claim 1 or 2, in which an insulation layer (I) is provided between the measuring electrode structure (D) and the substrate (S) .

4. Gas sensor according to one of Claims 1-3, in which the gas-sensitive layer (G) and the electrically conducting layer (V) are coated with a protective layer (Z) .

5. Gas sensor according to one of Claims 1 -4, in which the gas-sensitive layer (G) comprises strontium titanate, barium titanate, vanadium oxide, gallium oxide, ceroxide, barium stannate or zinc oxide.

6. Gas sensor according to one of Claims 1-5, in which the electrically conducting layer (V) comprises a catalytically active material.

7. Gas sensor according to one of Claims 1-5, in which the electrically conducting layer (V) comprises a metal oxide, a ceramic or an organic material.

8. Gas sensor according to one of Claims 1-7, in which the electrically conducting layer (V) has a perforated structure.

9. Gas sensor according to one of Claims 4-8, in which the protective layer (Z) comprises strontium titanate, barium titanate, vanadium oxide, gallium oxide, ceroxide, barium stannate or zinc oxide.

10. Gas sensor according to one of Claims 4-9, in which the protective layer (Z) and the gas-sensitive layer (G) comprise the same material.

11. Gas sensor according to one of Claims 1-10, in which a means of heating is provided.

12. Gas sensor according to one of Claims 1-3, 5-8, 10 or 11

- in which at least one further gas-sensitive layer (G2, G3), which is arranged over the electrically conducting layer (V), is provided,
- in which at least one further electrically conducting layer (W1, W2) which is arranged over the further gas-sensitive layer (G2, G3), is provided.

13. Gas sensor according to Claim 4 or 9, in which at least one further gas-sensitive layer (G2, G3) and at least one further electrically conducting layer (W1, W2) are provided between the electrically conducting layer (V) and the protective layer (Z).

14. Gas sensor according to Claims 12 or 13, in which the further gas-sensitive layer (G2, G3) comprises strontium titanate, barium titanate, vanadium oxide, gallium oxide, ceroxide, barium stannate or zinc oxide.

15. Gas sensor according to one of Claims 12-14, in which the further electrically conducting layer (W1, W2) comprises a metal oxide, a ceramic or an organic material.

16. Gas sensor according to one of Claims 12-15, in which the further electrically conducting layer (W1, W2) has a porous or perforated structure.

**Revendications**

1. Capteur de gaz comprenant :

- une couche sensible au gaz (G),
- une structure à électrodes de mesure (D) sur un côté de la couche sensible au gaz (G),
- une couche (V) opposée à la structure à électrodes de mesure (D) sur l'autre côté de la couche sensible au gaz (G), qui n'est pas en contact électrique,

  caractérisé en ce que
  la couche opposée (V)

- est conductrice électriquement et son extension latérale correspond environ à la structure à électrodes de mesure (G),
- a un effet d'écran électrique et conduit un flux de courant à travers la couche sensible au gaz (G).

2. Capteur de gaz selon la revendication 1, dans lequel est prévu un substrat (S), qui porte la structure à électrodes de mesures (D), la couche sensible au gaz (G) et la couche conductrice électriquement (V).

3. Capteur de gaz selon la revendication 1 ou 2, dans lequel est prévue une couche d'isolation (I) entre la structure à électrodes de mesure (D) et le substrat (S).

4. Capteur de gaz selon l'une des revendications 1 à 3, dans lequel la couche sensible au gaz (G) et la couche électriquement conductrice (V) sont revêtues d'une couche protectrice (Z).

5. Capteur de gaz selon l'une des revendications 1 à 4, dans lequel la couche sensible au gaz (G) présente du titanate de strontium, du titanate de barium, de l'oxyde de vanadium, de l'oxyde de gallium, de l'oxyde de cérium, du stanate de barium ou de l'oxyde de zinc.

6. Capteur de gaz selon l'une des revendications 1 à 5, dans lequel la couche électriquement conductrice (V) présente une matière active catalytiquement.

7. Capteur de gaz selon l'une des revendications 1 à 5, dans lequel la couche électriquement conductrice (V) présente un oxyde métallique, une céramique ou un matière organique.

8. Capteur de gaz selon l'une des revendications 1 à 7, dans lequel la couche électriquement conductrice (V) présente une structure poreuse ou trouée.

9. Capteur de gaz selon l'une des revendications 4 à 8, dans lequel la couche protectrice (Z) présente du titanate de strontium, du titanate de barium, de l'oxyde de vanadium, de l'oxyde de gallium, de l'oxyde de cérium, du stanate de barium ou de l'oxyde de zinc.

10. Capteur de gaz selon l'une des revendications 4 à 9, dans lequel la couche protectrice (Z) et la couche sensible au gaz (G) présentent la même matière.

11. Capteur de gaz selon l'une des revendications 1 à 10, dans lequel est prévu un moyen de chauffage.

12. Capteur de gaz selon l'une des revendications 1 à 3, 5 à 8, 10 ou 11,

  - dans lequel est prévue au moins une autre couche sensible au gaz (G2, G3), qui est disposée sur la couche électriquement conductrice (V),
  - dans lequel est prévue au moins une autre couche électriquement conductrice (W1, W2), qui est disposée par-dessus l'autre couche sensible au gaz (G2, G3).

13. Capteur de gaz selon la revendication 4 ou 9, dans lequel sont prévues au moins une autre couche sensible au gaz (G2, G3) et au moins une autre couche électriquement conductrice (W1, W2) entre la couche électriquement conductrice (V) et la couche protectrice (Z).

14. Capteur de gaz selon la revendication 12 ou 13, dans lequel l'autre couche sensible au gaz (G2, G3) présente du titanate de strontium, du titanate de barium, de l'oxyde de vanadium, de l'oxyde de gallium, de l'oxyde de cérium, du stanate de barium ou de l'oxyde de zinc.

15. Capteur de gaz selon l'une des revendications 12 à 14, dans lequel l'autre couche électriquement conductrice (W1, W2) présente un oxyde métallique, une céramique ou une matière organique.

16. Capteur de gaz selon l'une des revendications 12 à 15, dans lequel l'autre couche électriquement conductrice (W1, W2) présente une structure poreuse ou trouée.

# FIG 1

# FIG 2

## FIG 3

# FIG 4

# FIG 5

Gitterartige Struktur

# FIG 6

## FIG 7

## FIG 8

## FIG 10

# FIG 9

FIG 11